# EUROPEAN PATENT APPLICATION

(11) **EP 4 486 022 A1**
(43) Date of publication of application: **01.01.2025**
(21) Application number: 23756299.6
(22) Date of filing: 10.02.2023
(51) Int. Cl.: H04W 52/30, H04W 28/06, H04W 72/0457

(54) **TERMINAL, WIRELESS COMMUNICATION METHOD, AND BASE STATION**

(30) Priority: 21.02.2022 JP 2022025117
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/004630
(87) International publication number: WO 2023/157773

(57) **Abstract**

Appropriately reporting a PHR including a plurality of PHs. A terminal according to one aspect of the present disclosure includes a control section that generates a Medium Access Control (MAC) control element including two Power Headroom (PH) fields for one serving cell and including a P_{CMAX,f,c} field related to at least one of the two PH fields, and a transmitting section that transmits the MAC control element.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), a terminal (user terminal, User Equipment (UE)) transmits, to a network, a PH report (Power Headroom Report (PHR)) including information about power headroom (PH) per serving cell. The network can use the PHR for uplink transmission power control by the UE.

For NR, it is studied that one or a plurality of transmission/reception points (TRPs) (multi-TRP (MTRP)) perform DL transmission to the UE. It is studied that the UE performs UL transmission to one or a plurality of TRPs.

For future radio systems (for example, Rel-17 (or later versions) NR), Physical Uplink Shared Channel (PUSCH) repetition transmission with MTRP is under study. It is studied that a PHR Medium Access Control Control Element (PHR MAC CE) includes two PHRs when an MTRP PUSCH is supported/configured/enabled and reporting of two PHs for two TRPs is configured/enabled.

However, an existing specification does not define how to configure some fields when the PHR MAC CE includes two PHs. Unless appropriate PHR reporting is performed, communication throughput, communication quality, and the like may deteriorate.

Thus, an object of the present disclosure is to provide a terminal, a radio communication method, and a base station that can appropriately report a PHR including a plurality of PHs.

### Solution to Problem

A terminal according to one aspect of the present disclosure includes a control section that generates a Medium Access Control (MAC) control element including two Power Headroom (PH) fields for one serving cell and including a P_{CMAX,f,c} field related to at least one of the two PH fields, and a transmitting section that transmits the MAC control element.

### Advantageous Effects of Invention

According to one aspect of the present disclosure, it is possible to appropriately report a PHR including a plurality of PHs.

### Brief Description of Drawings

[FIG. 1] FIG. 1 is a diagram to show an example of a single entry PHR MAC CE in Rel-16 NR.
[FIG. 2] FIG. 2 is a diagram to show an example of a multiple entry PHR MAC CE in Rel-16 NR.
[FIG. 3] FIG. 3A is a diagram to show an example of cases assumed in Embodiment 2.1.4. FIG. 3B is a diagram to show an example of cases assumed in Embodiments 2.1.5 and 2.1.6.
[FIG. 4] FIG. 4A is a diagram to show an example of cases assumed in Embodiment 2.2.4. FIG. 4B is a diagram to show an example of cases assumed in Embodiments 2.2.5 and 2.2.6.
[FIG. 5] FIG. 5 is a diagram to show an example of a single entry PHR MAC CE in first to third embodiments.
[FIG. 6] FIG. 6 is a diagram to show an example of a multiple entry PHR MAC CE in the first to third embodiments.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

### Description of Embodiments

### (PHR)

In future radio communication systems (for example, NR), a UE transmits, to a network, a PH report (Power Headroom Report (PHR)) including information about power headroom (PH) per serving cell. The network can use the PHR for uplink transmission power control by the UE.

The PHR may be transmitted by MAC (Medium Access Control) signaling by using a PUSCH (Physical Uplink Shared Channel). For example, the PHR is notified by using a PHR MAC CE (Control Element) included in a MAC PDU (Protocol Data Unit).

In NR, a single entry PHR MAC CE related to a primary cell (PCell) is supported.

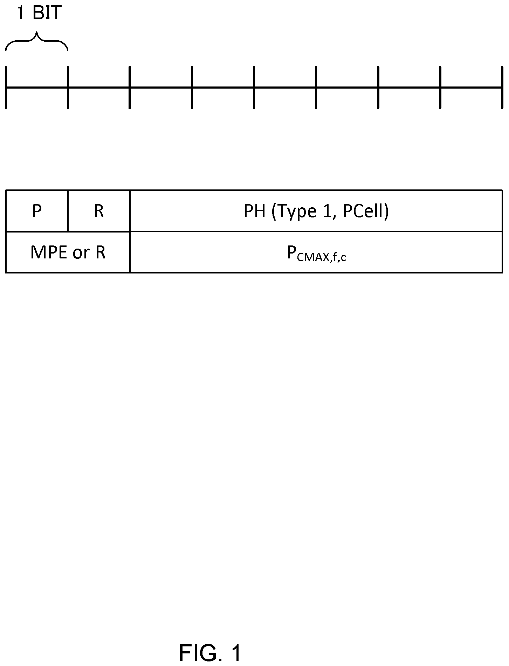

FIG. 1 is a diagram to show an example of the single entry PHR MAC CE in Rel-16 NR. The MAC CE is constituted by two octets (= 16 bits). 'R's in FIG. 1 indicate respective 1-bit reserved fields, and are set to, for example, '0' values.

'PH (Type 1, PCell)' in FIG.1 indicates a 6-bit field, and indicates an index related to type 1 PH for a primary cell (PCell). The index related to the PH is associated with a concrete PH value (decibel (dB) unit) (or level).

Note that, for example, type 1 PH may be PH with consideration of a PUSCH (for example, consideration of only power for the PUSCH), type 2 PH may be PH with consideration of a PUCCH (for example, consideration of power for both of the PUSCH and the PUCCH), and type 3 PH may be PH with consideration of a sounding reference signal (SRS) (for example, consideration of power for the PUSCH and the SRS).

'P_{CMAX,f,c}' in FIG. 1 indicates a 6-bit field, and indicates an index related to P_{CMAX,f,c} used for calculation of the above PH field. The index related to P_{CMAX,f,c} is associated with a concrete UE transmission power level (dB). Note that P_{CMAX,f,c} may be referred to as maximum transmission power (maximum permitted transmission power) for serving cell c of carrier f configured for the UE. Hereinafter, P_{CMAX,f,c} is also simply expressed as P_{CMAX}, PCMAX, or the like.

'P' in FIG. 1 may be a field related to power management maximum power reduction (P-MPR or maximum permitted UE output power reduction) for serving cell c, or may be a field associated with maximum permitted exposure (MPE). 'MPE' in FIG. 1 may be a field associated with MPE. Such a field as 'P,' 'MPE,' or the like may be interpreted as an 'R' field, depending on configuration using higher layer signaling for the UE.

When MPE reporting for FR2 (higher layer parameter "mpe-Reporting-FR2") is configured and the serving cell operates at FR2, the 'P' field is set to 0 if a P-MPR value applied for satisfying an MPE request is less than a specific P-MPR value (for example, P-MPR_00), otherwise the 'P' field is set to 1.

When MPE reporting for FR2 is not configured or the serving cell operates at FR1, the 'P' field may indicate whether power backoff is applied for power management. Note that, if the power backoff is not applied for the power management, when a corresponding P_{CMAX} field is configured to have different values, the 'P' field is set to 1.

When MPE reporting for FR2 (higher layer parameter "mpe-Reporting-FR2") is configured, the serving cell operates at FR2, and the 'P' field is set to 1, the 'MPE' field may indicate power backoff applied for satisfying an MPE request. This field may indicate an index corresponding to a measured P-MPR value (for example, dB unit).

When the MPE reporting for FR2 is not configured, the serving cell operates at FR1, or the 'P' field is set to 0, an R field (R bit) may be present in place of the 'MPE' field.

In NR, a multiple entry PHR MAC CE including a plurality of data similar to the above-mentioned single entry (2 octets) is also supported. The multiple entry PHR MAC CE may include PH fields for a primary secondary cell (PSCell) and a secondary cell (SCell), and the like. Note that the PCell and the PSCell may be referred to as a special cell (SpCell).

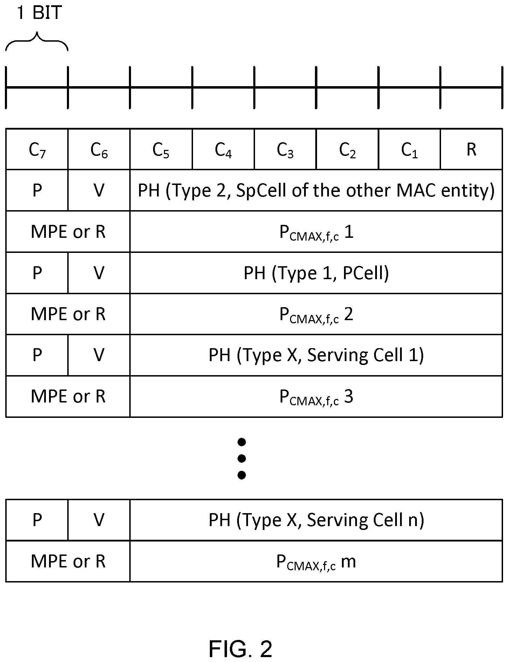

FIG. 2 is a diagram to show an example of the multiple entry PHR MAC CE in Rel-16 NR. Description of fields similar to those in FIG. 1 will not be repeated. 6-bit fields including the words 'PH' in FIG. 2 indicate PH fields for respective corresponding types (for example, types 1 to 3 mentioned above) and cells.

Note that the presence of a type 2 PH field for SpCell in another MAC entity may be configured by a higher layer parameter "phr-Type2OtherCell" being true.

A 6-bit field including the words 'P_{CMAX,f,c}' in FIG. 2 is a P_{CMAX,f,c} field indicating P_{CMAX,f,c} used for calculation of a PH field immediately preceding the field. 'Cᵢ' in FIG. 2 is a field indicating whether the PHR includes a PH field of a serving cell corresponding to serving cell index i. Note that FIG. 2 shows a case where a maximum serving cell index is less than 8, and when the index is 8 or more, the MAC CE may include a 'Cᵢ' field capable of indicating a serving cell with i = 31 or below.

Note that a number added to "serving cell" in the PH field and a number added to the P_{CMAX,f,c} field may not indicate serving cell indices, and may simply indicate which values included in the MAC CE these fields correspond to.

'V' in FIG. 2 is a field indicating whether a value of PH corresponding to a PH field immediately following 'V' is based on actual transmission (real transmission) (V = 0) or a reference format (V = 1). The PH based on the reference format may be referred to as virtual PH. Note that, when V = 1, corresponding 'P_{CMAX,f,c} ' field, 'MPE' field, and the like may be omitted.

The network may transmit, to the UE, PHR configuration information related to a condition for triggering a PHR. Here, the PHR configuration information includes, for example, a prohibit timer, a periodic timer, a pathloss change threshold value, and so on. For the notification, higher layer signaling may be used. The UE triggers the PHR when the PHR trigger condition is satisfied.

Note that, in the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

### (Multi-TRP)

For NR, it is studied that one or a plurality of transmission/reception points (TRPs) (multi-TRP (M-TRP)) perform DL transmission to the UE by using one or a plurality of panels (multiple panels). It is studied that the UE performs UL transmission to one or a plurality of TRPs.

Incidentally, for future radio systems (for example, Rel-17 (or later versions) NR), it is studied that a plurality of (for example, two) SRS resource indicators (SRIs) / transmitted precoding matrix indicators (TPMIs) are indicated by using single DCI for performing PUSCH repetition transmission with multiple TRPs (MTRP PUSCH repetition).

For example, in a case of codebook-based transmission, the UE may determine a precoder for PUSCH transmission, based on an SRI, a transmitted rank indicator (TRI), and a TPMI. In a case of non-codebook-based transmission, the UE may determine a precoder for PUSCH transmission, based on an SRI. Note that the SRI may be specified for the UE by DCI, or may be given by a higher layer parameter.

When the single DCI indicates a plurality of SRIs/TPMIs, option 1 or option 2 below is conceivable;
- Option 1: An SRI/TPMI (value) for a plurality of (for example, two) TRPs is indicated by using a field for indicating a plurality of (for example, two) SRIs / TPMIs; and
- Option 2: A field for indicating one SRI/TPMI is indicated, and the field for indicating the SRI/TPMI is configured with a codepoint corresponding to values of a plurality of (for example, two) SRIs / TPMIs.

In option 1, a codepoint of each of a plurality of SRI/TPMI fields may correspond to one TPMI value. Correspondence (association) between SRI/TPMI fields and SRI/TPMI values may be predefined by a specification. The correspondence (association) between SRI/TPMI fields and SRI/TPMI values may use correspondence defined in Rel. 16 (or earlier versions), or may be correspondence defined in Rel. 17 (or later versions). The correspondence between SRI/TPMI fields and SRI/TPMI values may vary for each plurality of SRI/TPMI fields.

In option 2, a codepoint with one indicated SRI/TPMI field may correspond to a plurality of (for example, two) SRI/TPMI values. Correspondence (association) between SRI/TPMI fields and SRI/TPMI values may be predefined by a specification, or may be notified/configured/activated by RRC signaling / MAC CE.

Note that it is studied that dynamic indication/switching of/between single PUSCH transmission / PUSCH repetition transmission using a single TRP (STRP) and PUSCH repetition transmission using multiple TRPs (Multi TRP (MTRP)) is performed by DCI. For the dynamic switch, a specific field defined in Rel. 16 (or earlier versions) and included in DCI may be used, or a specific field defined in Rel. 17 (or later versions) (for example, a field for specifying STRP or MTRP operation) may be used.

"Dynamic switch" in the present disclosure may mean "switch using at least one of higher layer signaling and physical layer signaling." "Switch" in the present disclosure may be interpreted as switching, change, changing, application, indication, configuration, or the like, and vice versa.

Incidentally, it is studied that a PHR MAC CE includes two PHRs (first PHR and second PHR) when an M-TRP PUSCH is supported/configured/enabled and reporting of two PHRs for two TRPs is configured/enabled. The reporting of two PHRs for two TRPs may be configured for the UE by a higher layer parameter (RRC parameter).

Here, the first PHR may be reported in a manner similar to that in Rel. 15/16. The second PHR may be a PHR for a TRP different from that of the first PHR. The second PHR may be reported as an actual PHR, or may be reported as a virtual PHR.

The actual PHR is a PHR based on actual PUSCH transmission, and may be referred to as a real PHR. The actual PHR may be computed based on a power control parameter for actual PUSCH transmission.

The virtual PHR is a PHR (based on reference PUSCH transmission) independent of actual PUSCH transmission, and may be referred to as a reference PHR, a PHR following a reference format, or the like. The virtual PHR may be computed based on a default power control parameter already defined in Rel-15/16 NR, or may be computed based on a new default power control parameter.

Note that, in the present disclosure, the power control parameter may be at least one of P_{CMAX,f,c}, Maximum Power Reduction (MPR) , P-MPR, additional maximum power reduction (Additional MPR (A-MPR)), ΔT_{c}, Po, alpha, a pathloss reference signal (PL-RS), and a closed-loop index (1). For example, in Rel-16 NR, the default power control parameter is MPR = 0 [dB], A-MPR = 0 [dB], P-MPR = 0 [dB], and ΔT_{c} = 0 [dB], Po and alpha are obtained by using Po _{_NOMIANAL_PUSCH,f,c} (0) and a higher layer parameter "p0-PUSCH-AlphaSetId=0," downlink pathloss estimation is obtained by using a higher layer parameter "pusch-PathlossReferenceRS-Id=0," and 1 = 0.

However, an existing specification does not define how to configure the P_{CMAX} field, P field, MPE field, and the like mentioned above when the PHR MAC CE includes two PHRs. Unless appropriate PHR reporting is performed, communication throughput, communication quality, and the like may deteriorate.

Thus, the inventors of the present invention came up with the idea of a method for appropriately reporting a PHR including a plurality of PHs.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted.

In the present disclosure, activate, deactivate, indicate, select, configure, update, determine, and the like may be interchangeably interpreted.

In the present disclosure, RRC, an RRC parameter, an RRC message, RRC signaling, a higher layer parameter, an information element (IE), and a configuration may be interchangeably interpreted. In the present disclosure, a MAC CE, an update command, and an activation/deactivation command may be interchangeably interpreted. In the present disclosure, "support," "control," "controllable," "operate," and "operable" may be interchangeably interpreted.

In the present disclosure, a panel, a beam, a panel group, a beam group, a precoder, an Uplink (UL) transmission entity, a TRP, spatial relation information (SRI), a spatial relation, an SRS resource indicator (SRI), an SRS resource, a control resource set (CORESET), a Physical Downlink Shared Channel (PDSCH), a codeword, a base station, a certain antenna port (for example, a demodulation reference signal (DMRS) port), a certain antenna port group (for example, a DMRS port group), a certain group (for example, a code division multiplexing (CDM) group, a certain reference signal group, or a CORESET group), a certain resource (for example, a certain reference signal resource), a certain resource set (for example, a certain reference signal resource set), a CORESET pool, a PUCCH group (PUCCH resource group), a spatial relation group, a downlink TCI state (DL TCI state), an uplink TCI state (UL TCI state), a unified TCI state, a common TCI state, QCL, QCL assumption, and the like may be interchangeably interpreted.

A TCI state Identifier (ID) and a TCI state may be interchangeably interpreted. The TCI state and the TCI may be interchangeably interpreted.

In the present disclosure, an index, an ID, an indicator, and a resource ID may be interchangeably interpreted. In the present disclosure, a sequence, a list, a set, a group, a cluster, a subset, and the like may be interchangeably interpreted.

In the present disclosure, a TRP index, a CORESET pool index (CORESETPoolIndex), a pool index, a group index, and the like may be interchangeably interpreted.

In the present disclosure, a single PDCCH (DCI) may be referred to as a PDCCH (DCI) of first scheduling type (for example, scheduling type A (or type 1)). Multi-PDCCH (DCI) may be referred to as a PDCCH (DCI) of a second scheduling type (for example, scheduling type B (or type 2)).

In the present disclosure, for the single DCI, an i th TRP (TRP #i) may mean an i th TCI state, an i th CDM group, or the like (i is an integer). For the multi-DCI, an i th TRP (TRP #i) may mean a CORESET corresponding to CORESET pool index = i, an i th TCI state, an i th CDM group, or the like (i is an integer).

In the present disclosure, multi-TRP (MTRP, M-TRP), a multi-TRP system, multi-TRP transmission, and multi-PDSCH may be interchangeably interpreted.

In the present disclosure, single DCI (sDCI), a single PDCCH, a multi-TRP system based on single DCI, sDCI-based MTRP, a plurality of PUSCHs (corresponding to different SRIs) being scheduled by one piece of DCI, sDCI-based MTRP transmission, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, mDCI-based MTRP transmission, multi-DCI being used for MTRP, a plurality of PUSCHs (corresponding to different SRIs) being scheduled by two pieces of DCI, and two CORESET pool indices or CORESET pool index = 1 (or a value being one or greater) being configured may be interchangeably interpreted.

Repetitions of the present disclosure may be interchangeably interpreted as MTRP-based repetitions, repetitions of Rel. 17, repetitions applying different spatial relations, repetition PUSCHs, repetition PUCCHs, repetition transmission, and the like. Repetition transmission in the following embodiments may correspond to at least one of repetition transmission type A, repetition transmission type B, and another repetition transmission type.

Note that, in repetition PUSCHs, the same codeword / transport block may be communicated on each PUSCH (each repetition). The repetition PUSCHs may be interpreted as a plurality of PUSCHs having the same contents (for example, data / codeword / transport block), and vice versa.

In the present disclosure, a first TRP and a second TRP may be interchangeably interpreted as a first PUSCH and a second PUSCH, a first PUSCH transmission occasion and a second PUSCH transmission occasion, first SRI and second SRI, and the like.

MTRP PUSCH repetitions in the present disclosure may be interpreted as two PUCCH repetitions to two TRPs, two PUSCH repetitions using two SRIs, two PUSCH repetitions using a set of two power control parameters (which are mentioned below), or the like, and vice versa.

In the present disclosure, repetition of an STRP PUSCH may mean repetition transmission of a plurality of PUSCHs transmitted by using one (same) SRI / power control parameter set / beam / precoder. Note that single transmission may mean PUSCH transmission transmitted by using one SRI / power control parameter set / beam / precoder.

Note that PUSCH repetition / PUSCH transmission to TRP 1 may mean PUSCH repetition / PUSCH transmission using a first SRI (or SRI field) / first power control parameter set.

PUSCH repetition / PUSCH transmission to TRP 2 may mean PUSCH repetition / PUSCH transmission using a second SRI (or SRI field) / second power control parameter set.

In the following embodiments, PUSCH repetition transmission using a plurality of TRPs may be interpreted as an M-TRP PUSCH, MTRP PUSCH repetition, PUSCH transmission using a plurality of TRPs, PUSCH repetition transmission for a plurality of TRPs, a PUSCH over a plurality of TRPs, repetition PUSCHs over a plurality of TRPs, repetition PUSCHs simply, repetition transmission, a plurality of PUSCH transmissions, PUSCH transmission using a plurality of SRIs, an M-TRP PUSCH, or the like, and vice versa.

PUSCH transmission using a single TRP may be referred to as an S-TRP PUSCH, STRP PUSCH repetition, PUSCH transmission using a single TRP, PUSCH repetition transmission for a single TRP, a PUSCH over a single TRP, repetition PUSCHs over a single TRP, single PUSCH transmission for a single TRP, single PUSCH transmission simply, PUSCH transmission in a single TRP, PUSCH transmission using a single SRI, or the like.

Note that each embodiment in the present disclosure will be described by using, as examples of UL transmission, PUSCH transmission for single TRP / multi-TRP using one piece of DCI and codebook-based PUSCH transmission, but may be applied to non-codebook-based PUSCH transmission, and PUSCH transmission to which each embodiment can be applied is not limited to these. When each embodiment in the present disclosure is applied to non-codebook-based PUSCH transmission, one or more SRS resources (SRIs) may be indicated for the UE by each SRI field. A common or different embodiments may be applied to codebook-based PUSCH transmission and non-codebook-based PUSCH transmission. UL transmission is not limited to a PUSCH, and each embodiment in the present disclosure can also be appropriately applied to a PUCCH (PUSCH may be interpreted as the PUCCH).

Each embodiment in the present disclosure will be described by using, as a primary example thereof, a case where the numbers of a plurality of TRPs, a plurality of SRIs, and the like are each two, but the numbers of these may each be three or more. In other words, "two" in the present disclosure may be interpreted as a "plurality of."

Note that, in the present disclosure, "CORESET pool index = 0 being configured" may be interpreted as "CORESET pool index = 0 being configured or the CORESET pool index is not configured," and vice versa.

In the present disclosure, a CORESET pool index, a PUSCH repetition index, and a higher layer index may be interchangeably interpreted.

In the present disclosure, a "PHR," a "PH," a "PH field," a "PH value," and the like may be interchangeably interpreted. In the present disclosure, the PH field may be interpreted as a PH field of a certain type (for example, type 1/2/3/X), and vice versa.

Note that each embodiment mentioned below assumes a case where MTRP PUSCH repetition is enabled by a higher layer parameter for a UE, but is not limited to this. "The MTRP PUSCH repetition being enabled" may mean "two codebook-based/non-codebook-based SRS resource sets being configured."

Note that, in each embodiment, a PHR MAC CE may include a field (P_{CMAX} field, P field, or the like) for each of a plurality of serving cells.

In the following embodiments, a "P_{CMAX} field / P-MPR value / power backoff of (/ for / corresponding to) a PH field" may be interpreted as a "P_{CMAX} field / P-MPR value / power backoff of (/ for / corresponding to) PUSCH transmission corresponding to a PH field", and vice versa.

In the present disclosure, P-MPR, a P-MPR value, and power backoff may be interchangeably interpreted.

### (Radio Communication Method)

### <First Embodiment>

A first embodiment relates to a P_{CMAX} field in a PHR MAC CE.

In the first embodiment, two P_{CMAX} fields corresponding to two PH fields of one serving cell may be included. A first P_{CMAX} field and a second P_{CMAX} field of these two P_{CMAX} fields may indicate a P_{CMAX} value used for computation of a first PH field of the above serving cell and a P_{CMAX} value used for computation of a second PH field of the above serving cell, respectively.

In the first embodiment, only one P_{CMAX} field corresponding to two PH fields of one serving cell may be included. The P_{CMAX} field may indicate at least one of the following:
- P_{CMAX} value used for computation of first PH field of above serving cell
- P_{CMAX} value used for computation of second PH field of above serving cell
- P_{CMAX} value used for computation of first and second PH fields of above serving cell (in this case, a common P_{CMAX} value may be used for computation of the first and second PH fields)
- P_{CMAX} value used for computation of PH field corresponding to actual PH for above serving cell (when the number of PH fields corresponding to actual PH for the above serving cell is 1)

According to the first embodiment described above, even when including, in PHR reporting, two PH fields of one serving cell, the UE can appropriately include, in the PHR reporting, a P_{CMAX} field corresponding to the PH fields.

### <Second Embodiment>

A second embodiment relates to a P field in the PHR MAC CE.

The second embodiment is broadly classified into two cases below:
- Embodiment 2.1: Case where MPE reporting for FR2 (higher layer parameter "mpe-Reporting-FR2") is configured and serving cell operates at FR2
- Embodiment 2.2: Case where MPE reporting for FR2 is not configured or serving cell operates at FR1

### {Embodiment 2.1}

In Embodiment 2.1, an applied P-MPR value for (corresponding to) a first PH field of the serving cell is also simply referred to as a first P-MPR value, and an applied P-MPR value for (corresponding to) a second PH field of the serving cell is also simply referred to as a second P-MPR value.

In Embodiment 2.1, two P fields corresponding to two PH fields of one serving cell may be included. A first P field and a second P field of these two P fields may indicate whether the first P-MPR value is less than a specific P-MPR value (for example, P-MPR _00) and whether the second P-MPR value is less than a specific P-MPR value (for example, P-MPR_00), respectively.

Note that, in Embodiment 2.1, the specific P-MPR values for the respective P fields may be the same, or may be different from each other. A UE may determine, based on a specific rule / UE capability, information related to a specific P-MPR value for a certain P field, or may be notified of the information by using physical layer signaling (for example, DCI), higher layer signaling (for example, RRC signaling or a MAC CE), a specific signal/channel, or combinations of these. In the present disclosure, the "specific P-MPR value" may be interpreted as a "configured/defined threshold value," and vice versa.

In Embodiment 2.1, only one P field corresponding to two PH fields of one serving cell may be included. The P field may follow at least one of the following:
- Embodiment 2.1.1: The P field is set to 0 when the first P-MPR value is less than a specific P-MPR value, otherwise the P field is set to 1.
- Embodiment 2.1.2: The P field is set to 0 when the second P-MPR value is less than a specific P-MPR value, otherwise the P field is set to 1.
- Embodiment 2.1.3: The P field is set to 0 when an applied P-MPR value for a PH field corresponding to actual PH for the above serving cell (the number of PH fields corresponding to the actual PH for the above serving cell is 1) is less than a specific P-MPR value, otherwise the P field is set to 1.
- Embodiment 2.1.4: The P field is set to 0 when both of the first P-MPR value and the second P-MPR value are less than a specific P-MPR value, otherwise the P field is set to 1.
- Embodiment 2.1.5: The P field is set to 0 when both of the first P-MPR value and the second P-MPR value are less than a specific P-MPR value, otherwise the P field is set to 1.
- Embodiment 2.1.6: The P field is set to 0 when either of (or at least one of) the first P-MPR value or the second P-MPR value is less than a specific P-MPR value, otherwise the P field is set to 1.

Note that, in Embodiment 2.1.4 above, only a case where both of the first P-MPR value and the second P-MPR value are less than the specific P-MPR value and a case where both of the first P-MPR value and the second P-MPR value are not less than the specific P-MPR value may be assumed (it may be assumed that another case does not occur).

Note that, in Embodiment 2.1.5/2.1.6 above, it may be assumed that a case where one of the first P-MPR value and the second P-MPR value is less than the specific P-MPR value and where the other is not less than the specific P-MPR value can occur (for example, it may be assumed that these cases can occur in addition to the cases assumed in Embodiment 2.1.4).

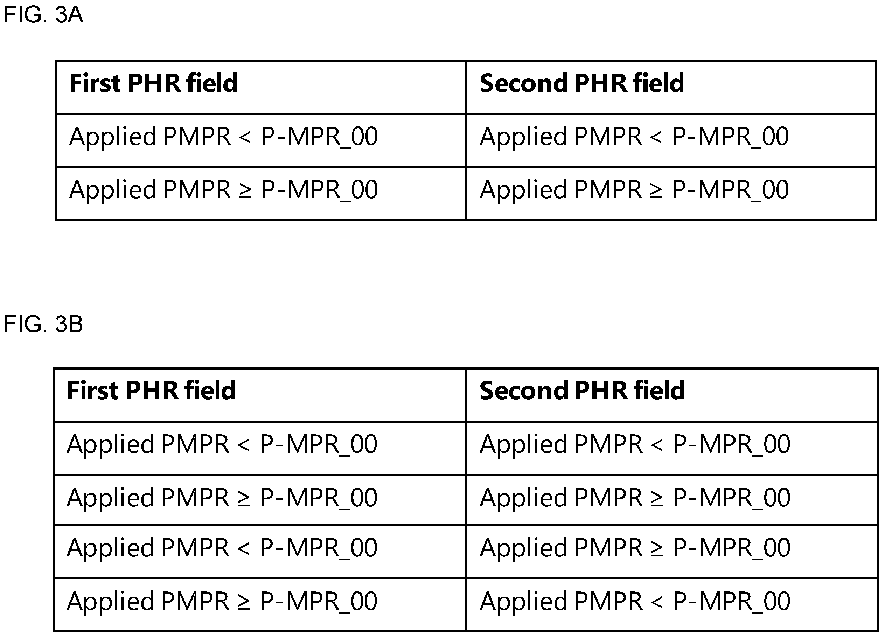

FIG. 3A is a diagram to show an example of the cases assumed in Embodiment 2.1.4. In the present example, only a case where both of the first PHR (PH) field and the second PHR (PH) field are less than a specific P-MPR value (for example, P-MPR _00) or are greater than or equal to the specific P-MPR value is assumed.

FIG. 3B is a diagram to show an example of the cases assumed in Embodiments 2.1.5 and 2.1.6. In the present example, not only a case where both of the first PHR (PH) field and the second PHR (PH) field are less than a specific P-MPR value (for example, P-MPR _00) or are greater than or equal to the specific P-MPR value, but also a case where one of the first PHR (PH) field and the second PHR (PH) field is less than the specific P-MPR value and where the other is greater than or equal to the specific P-MPR value are assumed.

### {Embodiment 2.2}

In Embodiment 2.2, power backoff being applied for power management for (corresponding to) a first PH field of the serving cell is also simply referred to as "first power backoff is applied," and power backoff being applied for power management for (corresponding to) a second PH field of the serving cell is also simply referred to as "second power backoff is applied."

In Embodiment 2.2, two P fields corresponding to two PH fields of one serving cell may be included. A first P field and a second P field of these two P fields may indicate whether first power backoff (for example, P-MPR > 0) is applied and whether second power backoff (for example, P-MPR > 0) is applied, respectively.

Note that, in Embodiment 2.2, power backoff for the respective P fields may be the same, or may be different from each other. The UE may determine, based on a specific rule / UE capability, information related to power backoff for a certain P field, or may be notified of the information by using physical layer signaling (for example, DCI), higher layer signaling (for example, RRC signaling or a MAC CE), a specific signal/channel, or combinations of these. In the present disclosure, "power backoff (for example, P-MPR > 0) is applied" may be interpreted as "if power backoff is not applied for power management, a corresponding P_{CMAX} field is configured to have different values", and vice versa.

In Embodiment 2.2, only one P field corresponding to two PH fields of one serving cell may be included. The P field may follow at least one of the following:
- Embodiment 2.2.1: The P field is set to 1 when the first power backoff is applied, otherwise the P field is set to 0.
- Embodiment 2.2.2: The P field is set to 1 when the second power backoff is applied, otherwise the P field is set to 0.
- Embodiment 2.2.3: The P field is set to 1 when power backoff (for example, P-MPR > 0) is applied for power management for a PH field corresponding to actual PH for the above serving cell (the number of PH fields corresponding to the actual PH for the above serving cell is 1), otherwise the P field is set to 0.
- Embodiment 2.2.4: The P field is set to 1 when both of the first power backoff and the second power backoff are applied, otherwise the P field is set to 0.
- Embodiment 2.2.5: The P field is set to 1 when both of the first power backoff and the second power backoff are applied, otherwise the P field is set to 0.
- Embodiment 2.2.6: The P field is set to 1 when either of (or at least one of) the first power backoff or the second power backoff is applied, otherwise the P field is set to 0.

Note that, in Embodiment 2.2.4 above, only a case where both of the first power backoff and the second power backoff are applied and a case where both of the first power backoff and the second power backoff are not applied may be assumed (it may be assumed that another case does not occur).

Note that, in Embodiment 2.2.5/2.2.6 above, it may be assumed that a case where one of the first power backoff and the second power backoff is applied and where the other is not applied can occur (for example, it may be assumed that these cases can occur in addition to the cases assumed in Embodiment 2.2.4).

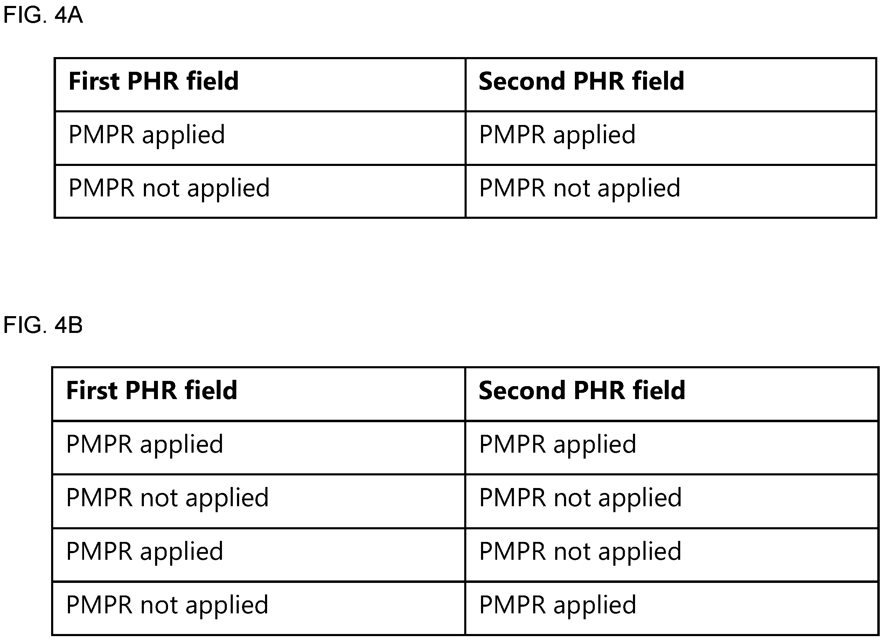

FIG. 4A is a diagram to show an example of the cases assumed in Embodiment 2.2.4. In the present example, only a case where P-MPR (power backoff) is applied for both of the first PHR (PH) field and the second PHR (PH) field and a case where P-MPR (power backoff) is not applied for both of these fields are assumed.

FIG. 4B is a diagram to show an example of the cases assumed in Embodiments 2.2.5 and 2.2.6. In the present example, not only a case where P-MPR is applied for both of the first PHR (PH) field and the second PHR (PH) field and a case where P-MPR is not applied for both of these fields, but also a case where P-MPR is applied for one of these fields, but is not applied for the other are assumed.

Note that, in the second embodiment, "set to 0" and "set to 1" may be interchangeably interpreted.

According to the second embodiment described above, even when including, in PHR reporting, two PH fields of one serving cell, the UE can appropriately include, in the PHR reporting, a P field corresponding to the PH fields.

### <Third Embodiment>

A third embodiment relates to an MPE field in the PHR MAC CE.

In the third embodiment, power backoff applied for satisfying an MPE request for (corresponding to) a first PH field of a serving cell is also simply referred to as first power backoff, and power backoff applied for satisfying an MPE request for (corresponding to) a second PH field of the serving cell is also simply referred to as second power backoff. Note that the MPE field may indicate an index corresponding to a measured P-MPR value (for example, dB unit).

In the third embodiment, when MPE reporting for FR2 (for example, a higher layer parameter "mpe-Reporting-FR2") is configured, the serving cell operates at FR2, and at least one P field corresponding to the serving cell is set to 1, two MPE fields corresponding to two PH fields of one serving cell may be included. A first MPE field and a second MPE field of these two MPE fields may indicate first power backoff and second power backoff, respectively.

In the third embodiment, when MPE reporting for FR2 (for example, a higher layer parameter "mpe-Reporting-FR2") is configured, the serving cell operates at FR2, and at least one P field corresponding to the serving cell is set to 1, only one MPE field corresponding to two PH fields of one serving cell may be included. The MPE field may indicate at least one of the following:
- First power backoff
- Second power backoff
- First power backoff and second power backoff (in this case, a common power backoff value may be used for computation of the first and second PH fields)
- Power backoff applied for satisfying MPE request for (corresponding to) PH field corresponding to actual PH for above serving cell (when the number of PH fields corresponding to actual PH for the above serving cell is 1)

Note that, in the third embodiment, "MPE reporting for FR2 (for example, a higher layer parameter "mpe-Reporting-FR2") is configured, and the serving cell operates at FR2" may be interpreted as "the MPE reporting for FR2 is not configured or the serving cell operates at FR1. "

According to the third embodiment described above, even when including, in PHR reporting, two PH fields of one serving cell, the UE can appropriately include, in the PHR reporting, an MPE field corresponding to the PH fields.

### <Concrete Example of PHR MAC CE in First to Third Embodiments>

The PHR MAC CE in first to third embodiments may be a single entry PHR MAC CE, or may be a multiple entry PHR MAC CE.

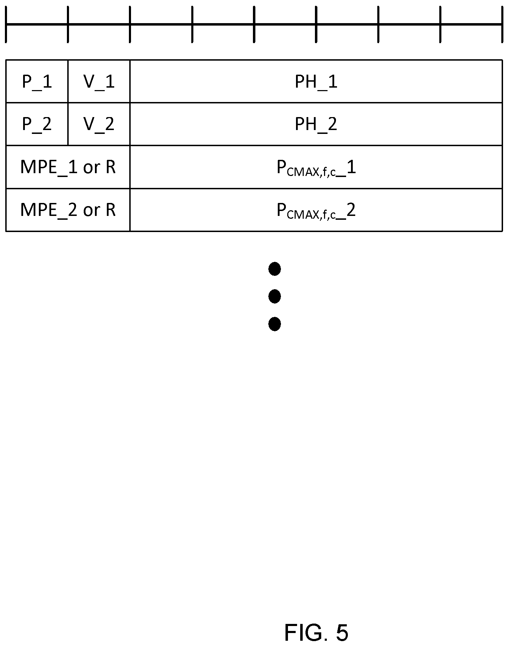

FIG. 5 is a diagram to show an example of the single entry PHR MAC CE in the first to third embodiments. The difference between FIG. 1 and FIG. 5 will be described, and description of the similarity between FIG. 1 and FIG. 5 will not be repeated.

PH_1 and PH_2 correspond to the first PH field and the second PH field, respectively, and may indicate, for example, PH for TRP 1 and PH for TRP 2, respectively. "_1" and "_2" added to another field indicate that the field corresponds to the first PH field and that the field corresponds to the second PH field, respectively.

For example, P_1 and P_2 may correspond to the first and second P fields in the second embodiment, MPE_1 and MPE_2 may correspond to the first and second MPE fields in the third embodiment, and P_{CMAX}_1 and P_{CMAX}_2 may correspond to the first and second P_{CMAX} fields in the first embodiment. Note that "_1" and "_2" may not be represented, or other representations may be used.

A V field indicates whether a PH field immediately following the V field is an actual PHR or a virtual PHR. For example, V = 1 and V = 0 may mean that a PHR field immediately following the V field is a virtual PHR and that the PHR field immediately following the V field is an actual PHR, respectively (V = 1 and V = 0 may be reversed).

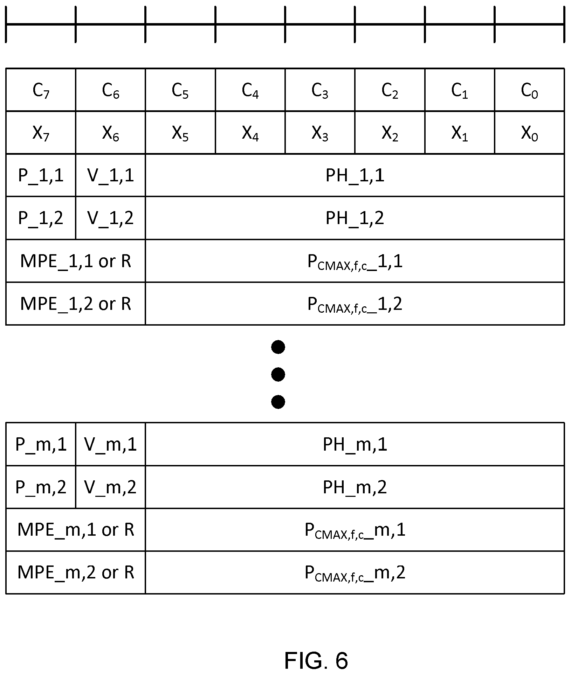

FIG. 6 is a diagram to show an example of the multiple entry PHR MAC CE in the first to third embodiments. The difference between FIG. 2 and FIG. 6 will be described, and description of the similarity between FIG. 2 and FIG. 6 will not be repeated. Description of fields with description similar to that of FIG. 5 will also not be repeated.

PH_j, 1 and PH_j,2 correspond to the first PH field and the second PH field, respectively, and may indicate, for example, PH for TRP 1 and PH for TRP 2, respectively. "_j,1" and "_j,2" added to another field indicate that the field corresponds to the first PH field and that the field corresponds to the second PH field, respectively. Note that "_j,1" and "_j,2" may not be represented, or other representations may be used.

In FIG. 6, an Xᵢ field corresponds to a field indicating reporting of one or two PHRs, and indicates whether an octet including PHR_j,2 corresponding to a Cᵢ field (one 8-bit row illustrated) is present. For example, Xᵢ = 1 and Xᵢ = 0 may mean the presence and absence of the octet, respectively (Xᵢ = 1 and Xᵢ = 0 may be reversed).

Note that Xo field may correspond to a field indicating reporting of one or two PHRs in relation to serving cell index = 0 (or PCell or SpCell). C₀ field may be an R field.

Note that the PHR MAC CE may not include the Xᵢ field (octet including the Xᵢ field). This is because it is unnecessary to include the Xᵢ field when the number of PHs to be reported for each serving cell is configured, when reporting of two PHRs for two TRPs is configured/enabled, or the like.

### <Others>

At least one of the above-mentioned embodiments may be applied to a case where STRP PUSCH repetition or single transmission (in other words, PUSCH transmission without repetition) is specified by DCI for a certain serving cell, or may be applied to a case where MTRP PUSCH repetition is specified by DCI for a certain serving cell.

Note that, in each embodiment, "report a PHR" may mean "report a PHR in relation to a serving cell for which STRP PUSCH repetition / single transmission / MTRP PUSCH repetition is specified by DCI." Note that, in the present disclosure, a reported PHR may be type 1 PH, or may be PH of another type.

Note that the first PH (PH indicated by the first PH field) and the second PH (PH indicated by the second PH field) described in each embodiment may correspond to at least one case of the following:
- Case A: The first PH is actual PH, and the second PH is actual PH.
- Case B: The first PH is actual PH, and the second PH is virtual PH.
- Case C: The first PH is virtual PH, and the second PH is virtual PH.
- Case D: The first PH is virtual PH, and the second PH is actual PH.

In the present disclosure, a UE may include a plurality of panels (UL panels, panels available for UL transmission). Note that, in the present disclosure, a panel, a UE antenna group, a UE antenna port group, a UE capability value, and a UE capability value set may be interchangeably interpreted. The plurality of panels may support different numbers of antenna ports, different numbers of SRS ports, different numbers of layers, different numbers of beams, different transmission powers, different equivalent isotopically radiated powers (EIRPs) (in other words, different panels may perform transmission/reception with these different parameters (elements)).

Different options (aspects/configurations/controls) in the above-mentioned first/second/third embodiments may be applied to a UE that supports the plurality of panels and a UE that does not support the plurality of panels.

Different options (aspects/configurations/controls) in the above-mentioned first/second/third embodiments may be applied in a case where two PHRs / two TRPs / two beams (SRS resource sets / SRIs / SRI fields) for MTRP PUSCH repetition are associated with the same panel and a case where these are associated with different panels. For example, a PHR MAC CE for reporting two PH fields for the same panel and a PHR MAC CE for reporting two PH fields for different panels may have different configurations.

Note that at least one of the above-mentioned embodiments may be applied only to a UE that has reported a specific UE capability or that supports the specific UE capability.

The specific UE capability may indicate at least one of the following:
- Whether to support PUSCH repetition with multi-TRP
- Whether to support (PHR MAC CE including) two PH / P_{CMAX} / P / MPE fields (for each serving cell)

Note that the above specific UE capability may be determined for each serving cell.

At least one of the above-mentioned embodiments may be applied to a case where a UE is configured with specific information related to the above-mentioned embodiments by higher layer signaling (when the UE is not configured with the specific information, operation in Rel. 15/16 is applied, for example). For example, the specific information may be information indicating enabling of PUSCH repetition with multi-TRP, information indicating enabling/configuration of a plurality of (PHR MAC CE including) PH / P_{CMAX} / P / MPE fields, an arbitrary RRC parameter for specific release (for example, Rel. 17), or the like. Which of the above-mentioned embodiments/cases/conditions PHR control is performed based on may be configured for the UE by using a higher layer parameter.

Note that the above-mentioned embodiments may be applied to a case where PUSCH repetition type A / type B is used.

Note that the above-mentioned embodiments may be applied to a case where a specific mapping pattern for MTRP repetition (cyclical, sequential, half-half, or the like) is used.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

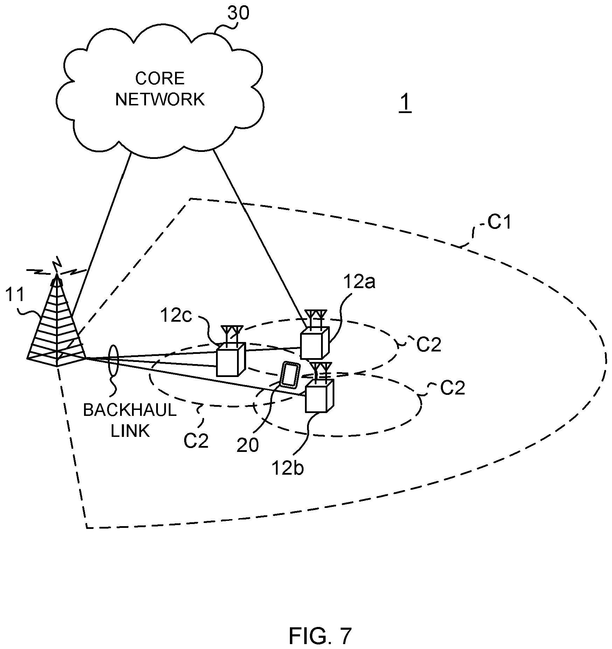

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, and so on may be communicated on the PUSCH. The Master Information Blocks (MIBs) may be communicated on the

### PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

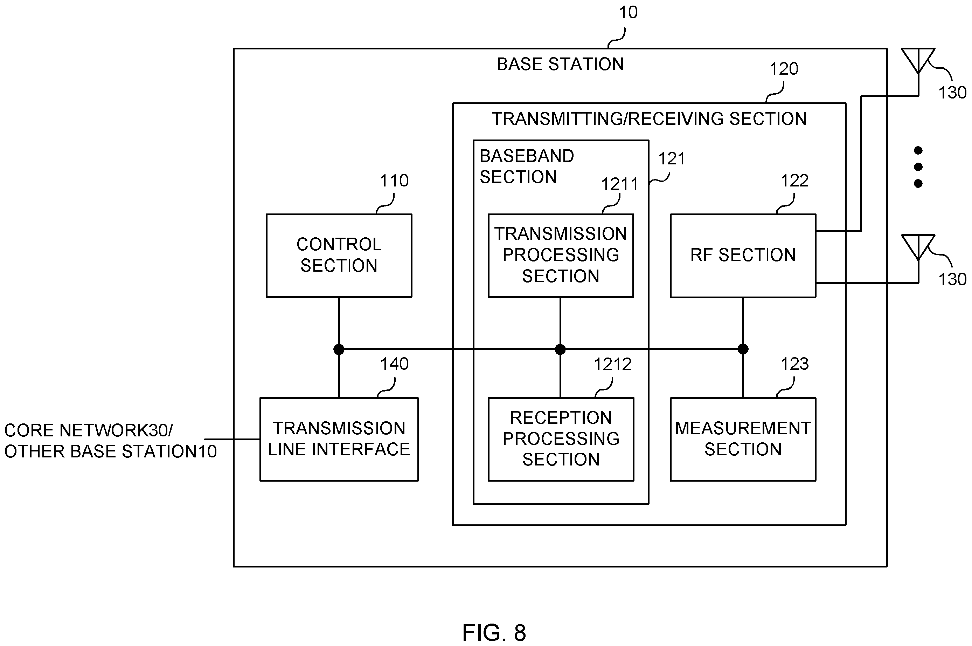

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit, to the user terminal 20, information (for example, an RRC parameter) for configuring, for one serving cell, inclusion of two Power Headroom (PH) fields in a Medium Access Control (MAC) control element.

The transmitting/receiving section 120 may receive, from the user terminal 20, the MAC control element including a P_{CMAX,f,c} field related to at least one of the two PH fields.

### (User Terminal)

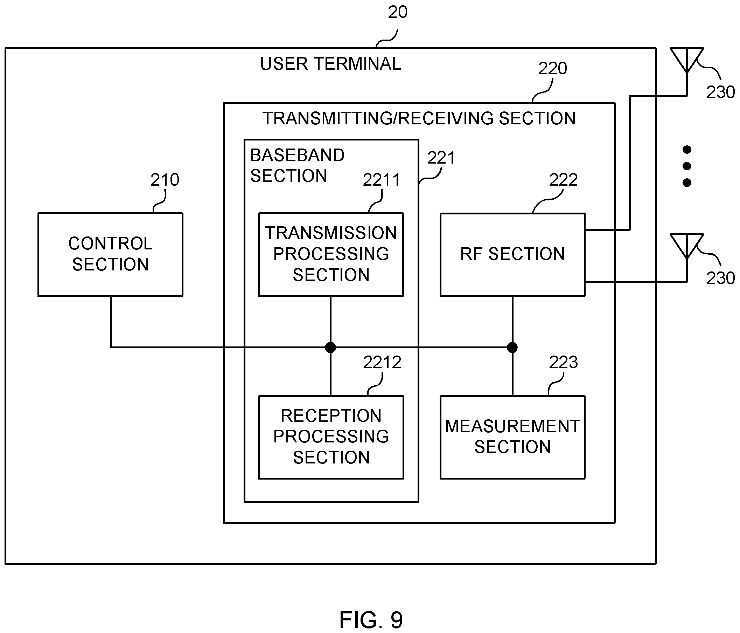

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure received power (for example, RSRP), received quality (for example, RSRQ, SINR, SNR), signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the control section 210 may generate a Medium Access Control (MAC) control element including two Power Headroom (PH) fields for one serving cell and including a P_{CMAX,f,c} field related to at least one of the two PH fields.

The transmitting/receiving section 220 may transmit the MAC control element.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

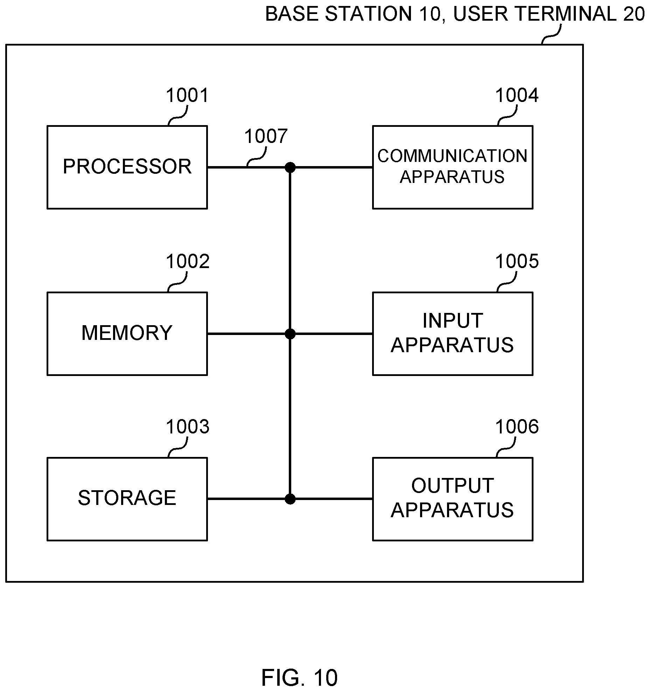

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of the configured BWPs may be active, and the UE may not assume transmission/reception of a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

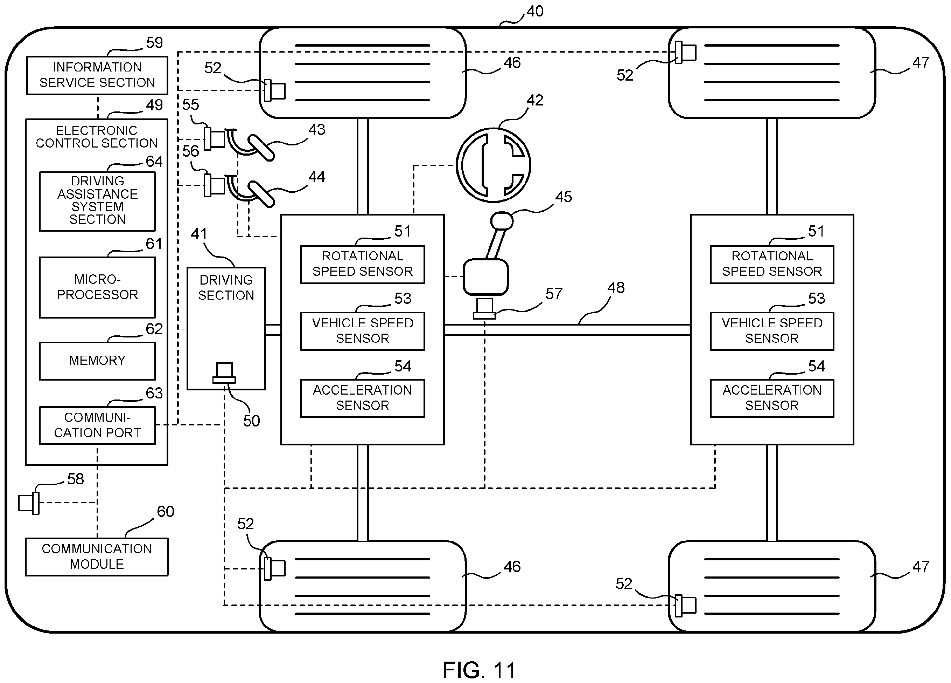

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2022-25117 filed on Feb. 21, 2022, the entire contents of which are incorporated herein by reference.

## Claims

1. A terminal comprising:
a control section that generates a Medium Access Control (MAC) control element including two Power Headroom (PH) fields for one serving cell and including a P_{CMAX,f,c} field related to at least one of the two PH fields; and
a transmitting section that transmits the MAC control element.

2. A radio communication method for a terminal, the radio communication method comprising:
generating a Medium Access Control (MAC) control element including two Power Headroom (PH) fields for one serving cell and including a P_{CMAX,f,c} field related to at least one of the two PH fields; and
transmitting the MAC control element.

3. A base station comprising:
a transmitting section that transmits, to a terminal, information for configuring, for one serving cell, inclusion of two Power Headroom (PH) fields in a Medium Access Control (MAC) control element; and
a receiving section that receives, from the terminal, the MAC control element including a P_{CMAX,f,c} field related to at least one of the two PH fields.
